# FASCICULE DE BREVET EUROPEEN

(11) **EP 4 143 449 B1**
(45) Date de publication et mention de la délivrance du brevet: **09.12.2026**
(21) Numéro de dépôt: 21734890.3
(22) Date de dépôt: 28.05.2021
(51) Int. Cl.: F16C 17/24, F16C 23/04, G01M 13/02, G01M 13/04, G01N 3/56

(54) **DISPOSITIF DE GUIDAGE ET SYSTEME MECANIQUE COMPRENANT UN TEL DISPOSITIF**
FÜHRUNGSGERÄT UND MECHANISCHES SYSTEM EINSCHLIESSLICH EINES SOLCHEN GERÄTS
GUIDANCE DEVICE AND MECHANICAL SYSTEM INCLUDING SUCH A DEVICE

(30) Priorité: 30.06.2020 FR 2006880
(43) Date de publication de la demande: 08.03.2023
(73) Titulaire: HYDROMECANIQUE ET FROTTEMENT, 42160 Andrézieux-Bouthéon (FR)
(72) Inventeur: PAVALLIER, Pierrick, 42120 PERREUX (FR); PROST, Fabrice, 42000 SAINT-ETIENNE (FR)
(74) Mandataire: Ipsilon
(86) Numéro de dépôt international: PCT/FR2021/050969
(87) Numéro de publication internationale: WO 2022/003264

(56) Documents cités:
- EP-A1- 3 045 749
- DE-A1- 102014 110 383

## Description

### Domaine technique

La présente invention concerne un dispositif de guidage, comprenant un composant métallique, un dispositif de détection et un dispositif de communication sans fil. Le domaine de l'invention est celui des dispositifs de guidage de pièces mobiles en contact de frottement par glissement.

### Art antérieur

Les dispositifs de guidage selon l'invention sont par exemple du type palier de guidage d'un axe, formant l'articulation d'une machine de travaux publics.

Les dispositifs montés sur des machines sont soumis à d'importantes sollicitations mécaniques. Des solutions de maintenance préventive et prédictive sont mises en place pour éviter les temps d'arrêts coûteux. Le document de l'état de la technique pertinent pour la présente invention est le brevet EP3045749A1.

### Exposé de l'invention

Le but de la présente invention est de proposer un dispositif de guidage permettant de mettre en oeuvre des opérations de maintenance prédictive selon la revendication 1 et les revendications dépendantes 2-9.

A cet effet, l'invention a pour objet un dispositif de guidage, comprenant :
- un composant métallique sous forme de bague munie d'une surface de frottement destinée à recevoir une pièce antagoniste en contact de frottement par glissement avec oscillation ;
- un système de détection d'usure de la surface de frottement comprenant un ou plusieurs capteurs ;
- un système de communication sans fil connecté au système de détection et configuré pour transmettre des informations relatives à l'usure de la surface de frottement vers l'extérieur du dispositif de guidage ;
caractérisé en ce que le ou les capteurs sont disposés exclusivement sur un bord longitudinal ou sur deux bords longitudinaux de la bague, chaque bord longitudinal étant défini sur au plus deux cinquièmes de la longueur de la bague annulaire, le ou chaque capteur (32) comprenant une enveloppe cylindrique (38) logée dans un orifice (28) traversant le composant métallique (20) entre la surface de frottement (22) et une surface opposée (23).

Ainsi, l'invention permet au dispositif de communiquer le niveau d'usure ou de jeu du composant de frottement, afin de le remplacer avant un dysfonctionnement critique. Lorsque le dispositif est en service, les contraintes mécaniques sont généralement concentrées sur les bords de la bague. Disposer les capteurs sur un bord plutôt qu'en partie centrale permet d'améliorer la détection d'usure et les chances de mettre en oeuvre une opération de maintenance prédictive avant un dysfonctionnement critique du dispositif.

Selon d'autres caractéristiques avantageuses de l'invention, prises isolément ou en combinaison :
- Chaque bord longitudinal est défini sur un tiers de la longueur de la bague annulaire.
- Le ou les capteurs sont disposés exclusivement sur un bord longitudinal de la bague.
- Le ou les capteurs sont répartis sur les deux bords longitudinaux de la bague.
- Le composant métallique est formé par une bague annulaire ayant une épaisseur radiale d'au moins 5 millimètres.
- Le composant métallique est formé par une bague annulaire ayant une épaisseur radiale d'au plus 15 millimètres.
- Le dispositif de guidage comprend un lubrifiant disposé sur la surface de frottement.
- La surface de frottement comprend des agencements faisant office de réserve de lubrifiant.
- Les agencements comprennent des cavités.
- Les agencements comprennent des rainures.
- Le système de détection est configuré pour la détection d'usure de la surface de frottement au moins sur une plage angulaire de 3° autour d'un axe central du composant métallique.
- Le système de détection est configuré pour la détection d'usure à 360° autour de l'axe central. Dans ce cas, l'opérateur effectuant le montage du dispositif de guidage et de son antagoniste n'a pas besoin de s'assurer que le système de détection est orienté correctement. En effet, la zone de charge maximale est forcément comprise dans la plage angulaire de détection. Le montage du dispositif est donc simplifié.
- Le système de détection comprend plusieurs capteurs, qui sont répartis autour de l'axe central et qui assurent la détection d'usure au moins sur une plage angulaire de 120°.
- Les capteurs assurent la détection d'usure sur plusieurs plages angulaires.
- Les capteurs sont répartis à 360° autour de l'axe central.
- Le système de détection comprend trois capteurs répartis à 120° autour de l'axe central.
- Le système de détection comprend quatre capteurs répartis à 90° autour de l'axe central.
- Le système de détection est configuré pour la détection d'usure sur une unique plage angulaire d'au moins 3°, c'est-à-dire selon une unique direction angulaire. Dans ce cas, l'opérateur effectuant le montage du dispositif de guidage et de son antagoniste doit s'assurer que le système de détection est orienté correctement, avec la plage angulaire de détection coïncidant avec la zone de charge maximale. Le dispositif est plus simple et moins coûteux, mais son montage demande plus de précision.
- Le système de détection est configuré pour la détection d'usure au moins sur une plage angulaire de 60, de préférence au moins 120°. Cela offre un bon compromis entre coût du dispositif, précision de la détection et précision du montage.
- Le système de détection comprend un unique capteur, qui assure la détection d'usure de la surface de frottement au moins sur une plage angulaire de 3°.
- Le système de détection comprend plusieurs capteurs assurant la détection d'usure au moins sur une plage angulaire de 60°. Les capteurs peuvent être disposés dans cette unique plage angulaire de 60°, ou sur une plage plus restreinte.
- Le ou chaque capteur comprend au moins un fil conducteur ayant une extrémité agencée à une profondeur donnée sous la surface de frottement.
- Le système de détection est configuré pour détecter différents seuils d'usure de la surface de frottement.
- Le ou chaque capteur comprend plusieurs fils conducteurs ayant des extrémités agencées à différentes profondeurs sous la surface de frottement.
- Chaque capteur comprend des moyens d'indexation de sa position angulaire autour de l'axe central.
- Chaque capteur comprend des moyens d'indexation de sa position axiale le long de la surface de frottement.
- Chaque capteur comprend des moyens d'indexation de sa position radiale par rapport à la surface de frottement.
- Le ou chaque capteur comprend une enveloppe cylindrique logée dans un orifice traversant le composant métallique entre la surface de frottement et une surface opposée.
- Les moyens d'indexation radiale comprennent une collerette formée sur l'enveloppe cylindrique du capteur.
- Le système de détection comprend une bande conductrice qui est disposée dans une rainure annulaire formée sur une surface du composant métallique opposée à la surface de frottement et qui est connectée, d'une part, à chaque capteur et, d'autre part, au système de communication sans fil.
- Le système de communication comprend un émetteur configuré pour transmettre les informations à travers des composants métalliques présentant une épaisseur totale supérieure à 10 millimètres.

L'invention a également pour objet un système mécanique, caractérisé en ce qu'il comprend au moins un dispositif de guidage tel que décrit ci-dessus, et une pièce antagoniste montée en contact de frottement par glissement avec oscillation contre la surface de frottement.

### Description des figures

L'invention sera mieux comprise à la lecture de la description qui va suivre, donnée uniquement à titre d'exemple non limitatif et faite en référence aux dessins annexés sur lesquels :
[Fig. 1] est une vue en perspective d'un système mécanique conforme à l'invention, comprenant un dispositif de guidage et un axe monté dans le dispositif.
[Fig. 2] est une vue de côté du dispositif, selon une direction radiale.
[Fig. 3] est une coupe selon la ligne III-III à la figure 2.
[Fig. 4] est une coupe selon la ligne IV-IV à la figure 2.
[Fig. 5] est une vue à plus grande échelle du détail V à la figure 4.
[Fig. 6] est une coupe analogue à la figure 4, montrant une variante de dispositif de guidage, avec des capteurs sur les deux bords.

### Description détaillée de l'invention

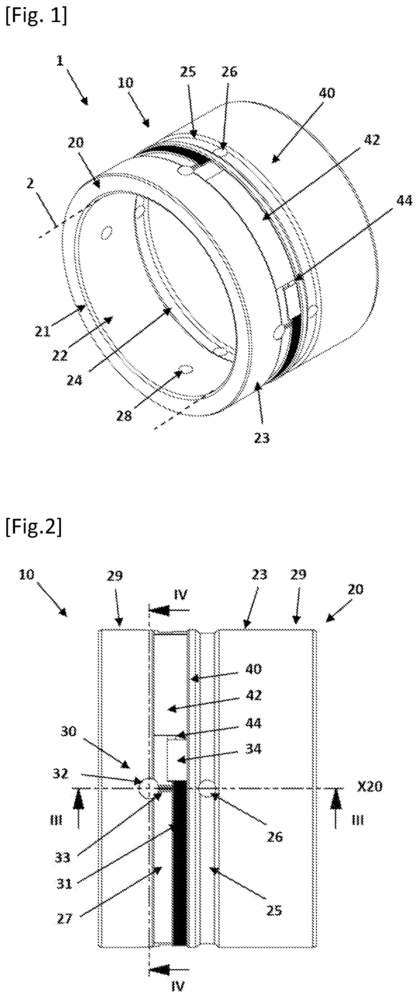

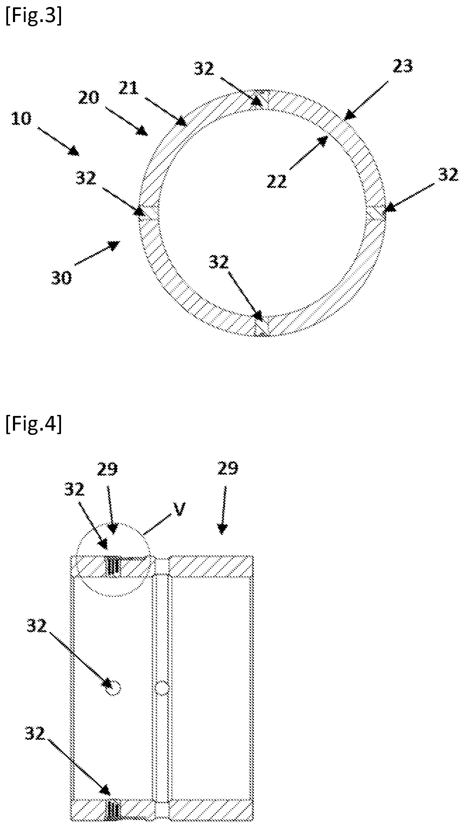

Sur les figures 1 à 5 est représenté un système mécanique (1) conforme à l'invention, comprend un dispositif de guidage (10) conforme à l'invention, et un axe (2) monté dans le dispositif (10). L'axe (2) est représenté par deux traits en pointillés dans un but de simplification. Le dispositif (10) est conçu pour le guidage de l'axe (2) en contact de frottement par glissement, en particulier glissement avec oscillation.

Le mouvement d'oscillation correspondant à une rotation incomplète autour de l'axe central, en va-et-vient. Soit l'axe (2) oscille dans le dispositif (10), soit le dispositif (10) oscille autour de l'axe (2). Dans les deux cas, les charges exercées sur le dispositif (10) définissent une zone de charge maximale, correspondant à une position angulaire particulière.

A l'interface de frottement entre le dispositif (10) et l'axe (2) est disposé un lubrifiant, de préférence de la graisse.

Le dispositif (10) comprend un composant de frottement métallique (20), un système de détection (30) et un système de communication sans fil (40).

Le composant métallique (20) est formé par une bague annulaire (21), munie d'une surface interne (22) et d'une surface externe (23) de profils cylindriques. La surface interne (22) constitue une surface de frottement destinée à recevoir l'axe (2) en contact de frottement par glissement. Avantageusement, la surface (22) peut comprendre des agencements faisant office de réserve de lubrifiant. Les agencements peuvent comprendre des cavités, des rainures et/ou d'autres types d'agencements.

Les surfaces (22, 23) comportent des rainures annulaires (24, 25) en partie centrale, reliées par des orifices (26) traversant la bague (21). Les éléments (24, 25, 26) constituent des moyens de lubrification de la surface (22). En variante, par exemple en cas de graissage par l'axe ou par le côté, la bague (21) peut être dépourvue d'éléments (24, 25, 26). Les moyens de lubrification de la surface (22) peuvent être de tout type adapté à l'application visée.

La surface (23) comporte une rainure annulaire (27) formée sur un côté de la rainure (25). Les surfaces (22, 23) sont reliées par des orifices (28) traversant la bague (21) en bordure de la rainure (27). Les éléments (27, 28) constituent des moyens de réception du système de détection (30). En variante, si la bague (21) est dépourvue d'éléments (24, 25, 26), les éléments (27, 28) peuvent être disposés en partie centrale. Selon une autre variante, la rainure (27) peut être disposée en partie centrale, tandis que les orifices (28) sont disposés sur un bord (29).

Suivant la direction longitudinale de la bague (21), on distingue une partie centrale et deux bords longitudinaux (29) encadrant la partie centrale. Chaque bord longitudinal (29) est défini sur au plus deux cinquièmes de la longueur de la bague (21). De préférence, chaque bord longitudinal (29) est défini sur un tiers de la longueur de la bague (21).

L'épaisseur de la bague (21) dépend de l'application visée. La bague (21) peut avoir une épaisseur comprise entre 5 et 15 millimètres, ou au-delà. Cette épaisseur est définie sur la portée fonctionnelle de la surface de frottement (22), en excluant un épaulement éventuel formé sur un bord (29).

Le système de détection (30) est configuré pour détecter l'usure de la surface de frottement (22). En alternative, le système de détection (30) pourrait être configuré pour détecter le jeu entre la surface de frottement (22) et la surface de l'axe (2).

Le système de détection (30) comprend une bande conductrice (31), plusieurs capteurs (32) connectés à la bande (31) via des fils conducteurs (33), et un connecteur (34) conçu pour connecter le système (30) au système (40). La bande (31) est constituée d'une nappe de fils conducteurs, intégrant les fils (33). Le connecteur (34) peut comprendre une puce électronique, configurée pour transformer l'information sur la perte de courant en information sur la profondeur d'usure. En alternative, le connecteur (34) peut comprendre de simples fils appartenant à la bande (31).

La bande conductrice (31) est disposée dans la rainure annulaire (27) formée sur la surface externe (23) du composant métallique (20). La bande conductrice (31) est connectée, d'une part, à chaque capteur (32) via les fils conducteurs (33) et, d'autre part, au système de communication sans fil (40) via le connecteur (34).

Sur l'exemple des figures, le système de détection (30) comprend quatre capteurs (32) répartis à 90° autour de l'axe central (X20) du composant (20). Ainsi, le système de détection (30) assure la détection d'usure sur une plage angulaire de 360° autour de l'axe central (X20).

Selon l'invention, avantageusement, les capteurs (32) sont disposés exclusivement sur un bord longitudinal (29) de la bague (21), sans déborder en partie centrale. En effet, lorsque le système mécanique (1) est en service, les contraintes mécaniques sont généralement concentrées sur les bords (29) de la bague (21). Disposer les capteurs (32) sur un bord (29) plutôt qu'en partie centrale permet d'améliorer la détection d'usure et les chances de mettre en oeuvre une opération de maintenance prédictive avant un dysfonctionnement critique du système (1).

Chaque capteur (32) comprend plusieurs fils conducteurs (35, 36, 37), ayant chacun une extrémité agencée à une profondeur donnée sous la surface de frottement (22). L'usure du fil conducteur (35, 36, 37) est fonction de l'usure de la surface (22). Les extrémités des fils conducteurs (35, 36, 37) sont agencées à différentes profondeurs sous la surface de frottement (22). L'usure successive des fils conducteurs (35, 36, 37) est liée à l'usure progressive de la surface de frottement (22), selon différents seuils. Ainsi, le système de détection (30) est configuré pour détecter différents seuils d'usure de la surface de frottement (22).

Chaque capteur (32) comprend une enveloppe cylindrique (38) logée dans un orifice (28) traversant le composant métallique (20) entre la surface de frottement (22) et la surface externe (23). Cette enveloppe (38) constitue un moyen d'indexation de la position angulaire et axiale du capteur (32). D'autres solutions sont envisageables pour former des moyens d'indexation angulaire et/ou axiale. L'enveloppe (38) logée dans un orifice (28) a l'avantage d'être une solution simple à mettre en oeuvre.

De préférence, chaque capteur (32) comprend des moyens d'indexation de sa position radiale par rapport à la surface de frottement (22). Par exemple, les moyens d'indexation radiale peuvent comprendre une collerette (39) formée sur l'enveloppe cylindrique (38) du capteur (32). D'autres solutions sont envisageables pour former les moyens d'indexation radiale, qui permettent de s'assurer que les fils (35, 36, 37) sont positionnés à la bonne profondeur par rapport à la surface (22).

Le système de communication sans fil (40) est connecté au système de détection (30) et configuré pour transmettre des informations relatives à l'usure ou au jeu vers l'extérieur du dispositif de guidage (10).

Le système (40) comprend un émetteur (42) envoyant des signaux radio dans toutes les directions. Si le dispositif (40) est disposé dans un environnement fermé, l'émetteur (42) peut être configuré pour transmettre les informations à travers des composants métalliques présentant une épaisseur totale supérieure à 10 millimètres. En pratique, les signaux peuvent être transmis suivant une direction axiale à un lecteur externe disposé à proximité de la bague (21), à travers les pièces de son environnement.

Selon un mode de réalisation particulier, l'émetteur (42) peut être constitué par une puce RFID. D'autres technologies peuvent être utilisées sans sortir du cadre de l'invention.

En outre, le système de communication (40) peut comprendre une source d'énergie permettant d'alimenter le système de détection (30).

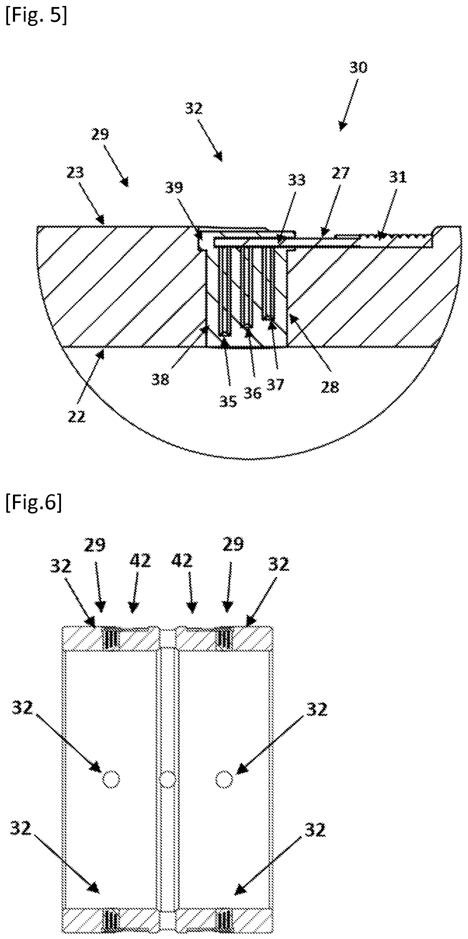

La figure 6 montre une variante de dispositif de guidage (10), comprenant des capteurs (32) disposés sur les deux bords longitudinaux (29), mais pas en partie centrale. Le dispositif (10) peut avantageusement être monté dans les deux sens, sans que l'opérateur soit forcé de faire attention à son orientation. Cette configuration est également utile en cas d'asymétrie dans la répartition des contraintes mécaniques entre les deux bords (29). De préférence, le système de communication (40) comporte deux émetteurs (42), un sur chaque côté. Cela facilite la liaison entre capteur (32) et émetteurs (42), et permet de s'assurer qu'un émetteur (42) est toujours proche du lecteur externe disposé à proximité du dispositif (10).

Par ailleurs, le dispositif (10) peut être conformé différemment des figures 1 à 6 sans sortir du cadre de l'invention, qui est définie par les revendications. En outre, les caractéristiques techniques des différents modes de réalisation et variantes mentionnés ci-dessus peuvent être, en totalité ou pour certaines d'entre elles, combinées entre elles. Ainsi, le dispositif (10) peut être adapté en termes de coût, de fonctionnalités et de performances.

## Revendications

1. Dispositif de guidage (10), comprenant :
- un composant métallique (20) sous forme de bague (21) munie d'une surface de frottement (22) destinée à recevoir une pièce antagoniste (2) en contact de frottement par glissement avec oscillation ;
- un système de détection (30) d'usure de la surface de frottement (22) comprenant un ou plusieurs capteurs (32) ;
- un système de communication sans fil (40) connecté au système de détection (30) et configuré pour transmettre des informations relatives à l'usure de la surface de frottement (22) vers l'extérieur du dispositif de guidage (10) ;
**caractérisé en ce que** le ou les capteurs (32) sont disposés exclusivement sur un bord longitudinal (29) ou sur deux bords longitudinaux (29) de la bague (21), chaque bord longitudinal (29) étant défini sur au plus deux cinquièmes de la longueur de la bague annulaire (21), le ou chaque capteur (32) comprenant une enveloppe cylindrique (38) logée dans un orifice (28) traversant le composant métallique (20) entre la surface de frottement (22) et une surface opposée (23).

2. Dispositif de guidage (10) selon la revendication 1, **caractérisé en ce que** chaque bord longitudinal (29) est défini sur un tiers de la longueur de la bague annulaire (21).

3. Dispositif de guidage (10) selon l'une quelconque des revendications précédentes, **caractérisé en ce que** le ou chaque capteur (32) comprend au moins un fil conducteur (35, 36, 37) ayant une extrémité agencée à une profondeur donnée sous la surface de frottement (22).

4. Dispositif de guidage (10) selon l'une quelconque des revendications précédentes, **caractérisé en ce que** le système de détection (30) est configuré pour détecter différents seuils d'usure de la surface de frottement (22).

5. Dispositif de guidage (10) selon la revendication 4, **caractérisé en ce que** le ou chaque capteur (32) comprend plusieurs fils conducteurs (35, 36, 37) ayant des extrémités agencées à différentes profondeurs sous la surface de frottement (22).

6. Dispositif de guidage (10) selon l'une quelconque des revendications précédentes, **caractérisé en ce que** le système de détection (30) comprend une bande conductrice (31) qui est disposée dans une rainure annulaire (27) formée sur une surface (23) du composant métallique (20) opposée à la surface de frottement (22) et qui est connectée, d'une part, à chaque capteur (32) et, d'autre part, au système de communication sans fil (40).

7. Dispositif de guidage (10) selon l'une quelconque des revendications précédentes, **caractérisé en ce que** le système de détection (30) comprend quatre capteurs (32) répartis à 90° autour de l'axe central (X20) du composant métallique (20).

8. Dispositif de guidage (10) selon l'une quelconque des revendications précédentes, **caractérisé en ce que** le système de communication sans fil (40) comprend un émetteur (42) configuré pour transmettre les informations à travers des composants métalliques présentant une épaisseur totale supérieure à 10 millimètres.

9. Système mécanique (1), **caractérisé en ce qu'**il comprend au moins un dispositif de guidage (10) selon l'une des revendications 1 à 8, et une pièce antagoniste (2) montée en contact de frottement par glissement avec oscillation contre la surface de frottement (22).

## Patentansprüche

1. Führungsvorrichtung (10), umfassend:
- ein metallisches Bauteil (20) in Form eines Rings (21), der mit einer Reibfläche (22) versehen ist, die dazu bestimmt ist, ein Gegenstück (2) in Gleitreibungskontakt mit Oszillation aufzunehmen;
- ein Erfassungssystem (30) zur Erfassung des Verschleißes der Reibfläche (22), das einen oder mehrere Sensoren (32) umfasst;
- ein drahtloses Kommunikationssystem (40), das mit dem Erfassungssystem (30) verbunden und dazu ausgelegt ist, Informationen bezüglich des Verschleißes der Reibfläche (22) nach außerhalb der Führungsvorrichtung (10) zu übertragen;
**dadurch gekennzeichnet, dass** der oder die Sensoren (32) ausschließlich an einem Längsrand (29) oder an zwei Längsrändern (29) des Rings (21) angeordnet sind, wobei jeder Längsrand (29) über höchstens zwei Fünftel der Länge des ringförmigen Rings (21) definiert ist, wobei der oder jeder Sensor (32) eine zylindrische Hülle (38) umfasst, die in einer Öffnung (28) aufgenommen ist, die das metallische Bauteil (20) zwischen der Reibfläche (22) und einer gegenüberliegenden Fläche (23) durchquert.

2. Führungsvorrichtung (10) nach Anspruch 1, **dadurch gekennzeichnet, dass** jeder Längsrand (29) über ein Drittel der Länge des ringförmigen Rings (21) definiert ist.

3. Führungsvorrichtung (10) nach einem der vorhergehenden Ansprüche, **dadurch gekennzeichnet, dass** der oder jeder Sensor (32) mindestens einen leitfähigen Draht (35, 36, 37) umfasst, der ein Ende aufweist, das in einer vorgegebenen Tiefe unter der Reibfläche (22) angeordnet ist.

4. Führungsvorrichtung (10) nach einem der vorhergehenden Ansprüche, **dadurch gekennzeichnet, dass** das Erfassungssystem (30) dazu ausgelegt ist, unterschiedliche Verschleißschwellen der Reibfläche (22) zu erfassen.

5. Führungsvorrichtung (10) nach Anspruch 4, **dadurch gekennzeichnet, dass** der oder jeder Sensor (32) mehrere leitfähige Drähte (35, 36, 37) umfasst, die Enden aufweisen, die in unterschiedlichen Tiefen unter der Reibfläche (22) angeordnet sind.

6. Führungsvorrichtung (10) nach einem der vorhergehenden Ansprüche, **dadurch gekennzeichnet, dass** das Erfassungssystem (30) ein leitfähiges Band (31) umfasst, das in einer ringförmigen Nut (27) angeordnet ist, die an einer der Reibfläche (22) gegenüberliegenden Fläche (23) des metallischen Bauteils (20) ausgebildet ist, und das einerseits mit jedem Sensor (32) und andererseits mit dem drahtlosen Kommunikationssystem (40) verbunden ist.

7. Führungsvorrichtung (10) nach einem der vorhergehenden Ansprüche, **dadurch gekennzeichnet, dass** das Erfassungssystem (30) vier Sensoren (32) umfasst, die im Abstand von 90° um die Mittelachse (X20) des metallischen Bauteils (20) verteilt sind.

8. Führungsvorrichtung (10) nach einem der vorhergehenden Ansprüche, **dadurch gekennzeichnet, dass** das drahtlose Kommunikationssystem (40) einen Sender (42) umfasst, der dazu ausgelegt ist, die Informationen durch metallische Bauteile mit einer Gesamtdicke von mehr als 10 Millimetern zu übertragen.

9. Mechanisches System (1), **dadurch gekennzeichnet, dass** es mindestens eine Führungsvorrichtung (10) nach einem der Ansprüche 1 bis 8 und ein Gegenstück (2) umfasst, das in Gleitreibungskontakt mit Oszillation an der Reibfläche (22) montiert ist.

## Claims

1. Guiding device (10), comprising:
- a metal component (20) in the form of a ring (21) provided with a friction surface (22) intended to receive a counterpart (2) in sliding friction contact with oscillation;
- a detection system (30) for detecting wear of the friction surface (22), comprising one or more sensors (32);
- a wireless communication system (40) connected to the detection system (30) and configured to transmit information relating to the wear of the friction surface (22) to the outside of the guiding device (10);
**characterized in that** the sensor or sensors (32) are arranged exclusively on one longitudinal edge (29) or on two longitudinal edges (29) of the ring (21), each longitudinal edge (29) being defined over at most two fifths of the length of the annular ring (21), the or each sensor (32) comprising a cylindrical casing (38) housed in an orifice (28) passing through the metal component (20) between the friction surface (22) and an opposite surface (23).

2. Guiding device (10) according to claim 1, **characterized in that** each longitudinal edge (29) is defined over one third of the length of the annular ring (21).

3. Guiding device (10) according to any one of the preceding claims, **characterized in that** the or each sensor (32) comprises at least one conductive wire (35, 36, 37) having an end arranged at a given depth below the friction surface (22).

4. Guiding device (10) according to any one of the preceding claims, **characterized in that** the detection system (30) is configured to detect different wear thresholds of the friction surface (22).

5. Guiding device (10) according to claim 4, **characterized in that** the or each sensor (32) comprises several conductive wires (35, 36, 37) having ends arranged at different depths below the friction surface (22).

6. Guiding device (10) according to any one of the preceding claims, **characterized in that** the detection system (30) comprises a conductive strip (31) which is arranged in an annular groove (27) formed on a surface (23) of the metal component (20) opposite the friction surface (22) and which is connected, on the one hand, to each sensor (32) and, on the other hand, to the wireless communication system (40).

7. Guiding device (10) according to any one of the preceding claims, **characterized in that** the detection system (30) comprises four sensors (32) distributed at 90° around the central axis (X20) of the metal component (20).

8. Guiding device (10) according to any one of the preceding claims, **characterized in that** the wireless communication system (40) comprises a transmitter (42) configured to transmit the information through metal components having a total thickness greater than 10 millimeters.

9. Mechanical system (1), **characterized in that** it comprises at least one guiding device (10) according to one of claims 1 to 8, and a counterpart (2) mounted in sliding friction contact with oscillation against the friction surface (22).
